# EUROPEAN PATENT SPECIFICATION

(11) **EP 4 506 093 B1**
(45) Date of publication and mention of the grant of the patent: **10.06.2026**
(21) Application number: 23830125.3
(22) Date of filing: 25.06.2023
(51) Int. Cl.: B23D 21/04, B23D 33/02, B25F 5/02, B23D 35/00

(54) **PIPE CUTTING MACHINE**
ROHRSCHNEIDEMASCHINE
MACHINE DE COUPE DE TUYAU

(30) Priority: 29.06.2022 CN 202210751272; 29.06.2022 CN 202210753373
(43) Date of publication of application: 12.02.2025
(73) Proprietor: Nanjing Chervon Industry Co., Ltd., Nanjing, Jiangsu 211106 (CN)
(72) Inventor: YANG, Bin, Nanjing, Jiangsu 211106 (CN); HAO, Jingdong, Nanjing, Jiangsu 211106 (CN); FU, Xiangqing, Nanjing, Jiangsu 211106 (CN)
(74) Representative: Sun, Yiming
(86) International application number: PCT/CN2023/102091
(87) International publication number: WO 2024/001947

(56) References cited:
- EP-A1- 3 345 706
- CN-U- 215 034 029
- US-A1- 2009 165 306
- US-A1- 2010 088 898
- US-A1- 2011 005 084
- US-A1- 2018 290 322
- US-A1- 2022 134 526

## Description

### RELATED APPLICATION INFORMATION

This invention claims priority to Chinese Patent Invention No. 202210751272.X filed Jun. 29, 2022 and Chinese Patent Invention No. 202210753373.0 filed Jun. 29, 2022.

### TECHNICAL FIELD

The present invention relates to a power tool, for example, a pipe cutter.

### BACKGROUND

A pipecutter is a power tool for cutting pipes. The pipecutter includes two bracket assemblies: upper and lower bracket assemblies. During cutting, a pipe is clamped between the upper and lower bracket assemblies. A cutting blade is mounted on the upper bracket assembly. The upper and lower bracket assemblies are driven by a motor to rotate to cut the pipe. To conveniently mount the pipe between the upper and lower bracket assemblies, the two bracket assemblies are required to be relatively movable. Meanwhile, during cutting, the upper and lower bracket assemblies are required to be locked so that the bracket assemblies are prevented from moving away from each other when pushed by the pipe and failing to press the pipe tightly to complete the cutting. In other words, a locking structure is required that can lock the two bracket assemblies during cutting.

US2010088898A1 discloses a pipe cutter according to the preamble of claim 1, namely a pipe cutter for cutting a pipe including a cutting head assembly having a first carriage and a second carriage spaced apart to define a cutting area. The first carriage supports a cutting mechanism, and the second carriage is configured to support a pipe within the cutting area. The carriages have a locked state and an unlocked state such that when the carriages are in the unlocked state, the carriages are movable relative to each other and biased into the cutting area. The pipe cutter also includes a drive assembly configured to rotate the cutting head assembly and a locking mechanism configured for changing the carriages from the unlocked state to the locked state and for holding the carriages in the locked state. The locking mechanism includes an actuation member rotatably coupled to the first carriage.

US2018290322A1 discloses a hand-held cutting tool including a cutting member, a motor, a housing, a baseplate, a drive shaft, a transmission device and a shield. The motor has an output shaft rotating around a first axis. The housing is provided with a handle portion. The baseplate having a supporting surface connects to the housing and is rotatable about a second axis. The drive shaft drives the cutting member to rotate around a third axis perpendicular to the first axis. The shield encloses at least in part the cutting member in a circumferential direction of the third axis. The first axis obliquely intersects the supporting surface. The supporting surface is parallel to the third axis. The shield and the handle portion are disposed on a same side of the supporting surface. The second axis is parallel to the third axis.

EP3345706A1 discloses a C-type tubing cutter described that accommodates and cuts a range of tubing or workpiece sizes. The cutter includes a radially positionable roller carriage that can be selectively positioned in one of several predetermined positions corresponding to different tubing sizes. The cutter also includes a trigger that can be engaged with the roller carriage to lock the carriage in a desired position.

CN215034029U discloses an utility model providing a pipe cutting machine which comprises a shell. The cutting head assembly is at least partially contained in the shell; the transmission mechanism is arranged in the shell and is in transmission connection with the cutting head assembly; the motor is arranged in the shell and is connected with the transmission mechanism to drive the cutting head assembly to rotate; the cutting head assembly comprises a cutting head containing shell, a tool rest and a supporting frame, the tool rest and the supporting frame are independently and movably connected to the cutting head containing shell, the tool rest and the supporting frame are oppositely arranged, a cutting area is formed between the tool rest and the supporting frame, and a to-be-cut pipeline can be placed in the cutting area.

US2009165306A1discloses an improved tubing cutter apparatus which provides easier and faster modes of operation.

US2022134526A1 discloses a power tool accessory for cutting tubular members including a housing, an input shaft configured to be coupled to a rotary power tool, a transmission, and a cutting head removably received in a front end of the housing.

US2011005084A1 discloses a power tool, such as a pipe cutter, including a rotatable cutting head assembly, an electric motor connectable to a rechargeable battery, and a controller. The controller is configured to monitor the state of charge on the battery, compare the state of charge to one or more thresholds, and prevent or limit operation of the power tool when the state of charge is less than or equal to one or more of the thresholds.

### SUMMARY

The present invention provides a pipecutter so that the pipecutter can be provided with a locking and unlocking structure stable and reliable and convenient to operate, a grip can have a relatively small size for being held, and the whole machine can have a reasonable center of gravity and good operation experience.

To achieve the above-mentioned object, the invention is set out in the appended claims.

### BRIEF DESCRIPTION OF DRAWINGS

FIG. 1 is a perspective view of a pipecutter.
FIG. 2 is a perspective view of the pipecutter of FIG. 1 with part of a housing removed.
FIG. 3 is a side view of the pipecutter of FIG. 2.
FIG. 4 is a perspective view of a cutting portion of a pipecutter with a housing removed.
FIGS. 5A to 5C are schematic views of different positions of a drive block in FIG. 4.
FIG. 6 is a perspective view of a rotating assembly from an angle.
FIG. 7 is a perspective view of a rotating assembly from another angle.
FIG. 8 is a perspective view of internal structures of the rotating assembly of FIG. 7.
FIG. 9 is a perspective view of a first bracket assembly, a second bracket assembly, and a locking assembly from an angle.
FIG. 10 is a perspective view of a first bracket assembly, a second bracket assembly, and a locking assembly from another angle.
FIG. 11 is an exploded view of the structure of FIG. 4 from another angle.
FIG. 12 is a perspective view of an output shaft assembly in FIG. 11 from an angle.
FIG. 13 is a perspective view of the output shaft assembly of FIG. 12 from another angle.
FIG. 14 is a perspective view of a second assembly of an output shaft assembly.
FIG. 15 is an exploded view of the second assembly of FIG. 14 from an angle.
FIG. 16 is an exploded view of the second assembly of FIG. 15 from another angle.
FIG. 17 is an exploded view of a second drive assembly in FIG. 11.
FIG. 18 is a perspective view of a second drive assembly.
FIG. 19 is an exploded view of a second pushing assembly in FIG. 18.
FIG. 20 is a perspective view of the structure of FIG. 4 from another angle.
FIG. 21 is a perspective view of hidden structures of a second drive assembly in FIG. 20.
FIG. 22 is a perspective view when a ring gear is at a position.
FIG. 23 is a perspective view when a ring gear is at another position.
FIG. 24 is a perspective view when a first pushing member and a second pushing member are at a position.
FIG. 25 is a perspective view when a first pushing member and a second pushing member are at another position.
FIG. 26 is a plan view when a first pushing member, a second pushing member, and a rotating assembly are at a certain position.
FIG. 27 is a plan view when a first pushing member, a second pushing member, and a rotating assembly are at a certain position.
FIG. 28 is a plan view when a first pushing member, a second pushing member, and a rotating assembly are at a certain position.
FIG. 29 is a plan view when a first pushing member, a second pushing member, and a rotating assembly are at a certain position.
FIG. 30 is a plan view when a first pushing member, a second pushing member, and a rotating assembly are at a certain position.
FIG. 31 is a plan view when a first pushing member, a second pushing member, and a rotating assembly are at a certain position.
FIG. 32 shows an example of a stopper.
FIG. 33 shows another example of a stopper.
FIG. 34 is a perspective view of a cutting portion with a housing on a side opened.
FIG. 35 is a perspective view of a stopper disposed in a housing.
FIG. 36 is a side view of a pipecutter.
FIG. 37 is a sectional view of FIG. 34 along A-A.

### DETAILED DESCRIPTION

Before any examples of this invention are explained in detail, it is to be understood that this invention is not limited to its application to the structural details and the arrangement of components set forth in the following description or illustrated in the above drawings.

In this invention, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this invention, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this invention generally indicates that the contextual associated objects belong to an "and/or" relationship.

In this invention, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this invention, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this invention, those skilled in the art will understand that a function performed by an assembly may be performed by one assembly, multiple assemblies, one member, or multiple members. Likewise, a function performed by a member may be performed by one member, an assembly, or a combination of members.

In this invention, the terms "up", "down", "left", "right", "front", and "rear" " and other directional words are described based on the orientation or positional relationship shown in the drawings, and should not be understood as limitations to the examples of this invention. In addition, in this context, it also needs to be understood that when it is mentioned that an element is connected "above" or "under" another element, it can not only be directly connected "above" or "under" the other element, but can also be indirectly connected "above" or "under" the other element through an intermediate element. **It** should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

**In** this invention, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this invention, the term "device", "module" or "unit" may be implemented in the form of hardware or software to achieve specific functions.

In this invention, the terms "computing", "judging", "controlling", "determining", "recognizing" and the like refer to the operations and processes of a computer system or similar electronic computing device (e.g., controller, processor, etc.).

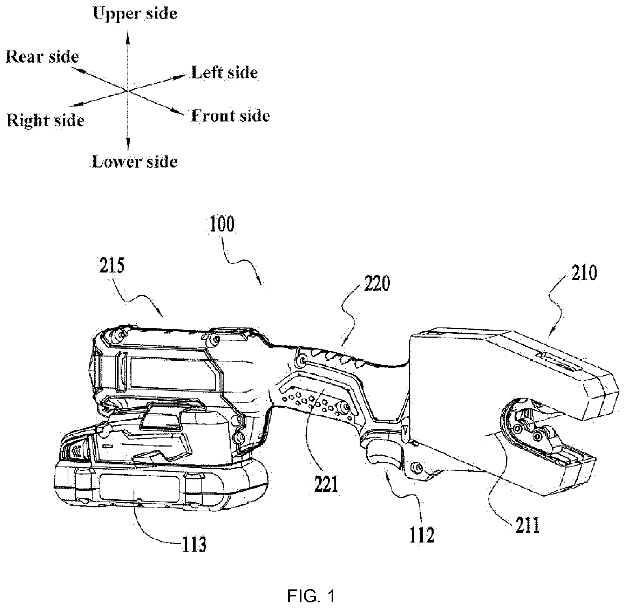

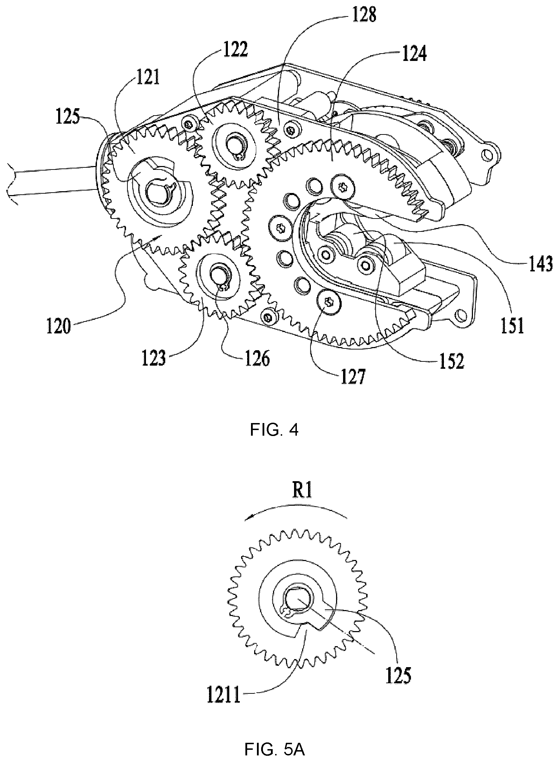

As shown in FIGS. 1 to 4, the front end of a pipecutter 100 is a cutting portion 210. When the pipecutter 100 performs a cutting operation, a pipe 104 to be cut is placed in the cutting portion 210. As shown in FIG. 4, the cutting portion 210 includes at least a cutting blade 143, and the cutting portion 210 is wrapped by a housing 110. In this example, the cutting blade 143 rotates around the pipe 104 to be cut during cutting. The pipe 104 extends along a rotation axis 211. When the pipe 104 is clamped in the cutting portion 210 and cut, the cutting blade 143 rotates around the rotation axis 211 to cut the pipe 104. When the pipe 104 is clamped in the cutting portion 210, the rotation axis 211 of the cutting blade 143 substantially coincides with a central axis of the pipe 104.

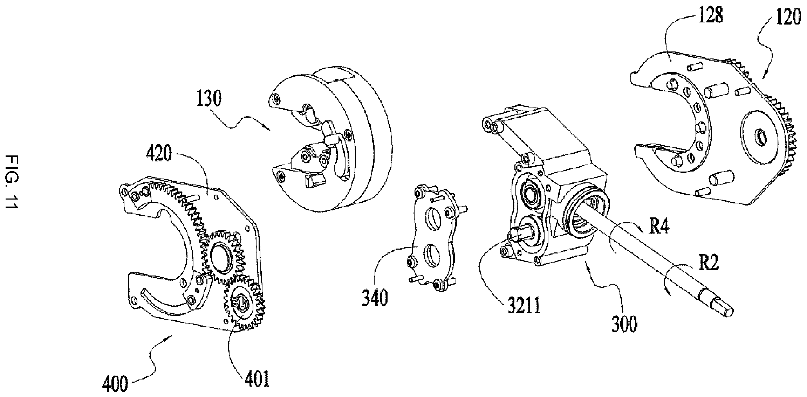

A battery pack coupling portion 115 coupled to a battery pack 113 is disposed at one end of the housing 110, and the cutting portion 210 is wrapped by the other end of the housing 110. The housing 110 between the battery pack coupling portion 115 and the cutting portion 210 wraps around a circuit board 114, a motor 111, and a gearbox 116 and extends toward the cutting portion 210 to form a grip 220 for an operator to hold. The housing 110 forms an accommodation space 1100, where the motor 111, the gearbox 116, a control system including the circuit board 114, an output shaft 117, a first drive assembly 120, a rotating assembly 130, and a second drive assembly 400 (see FIG. 11) are accommodated in the accommodation space 1100.

A switch 112 is disposed on the grip 220, and the switch 112 is configured to control the motor 111 to start and stop. A toggle 1121 is disposed near the switch 112. The toggle is turned so that a rotation direction of the motor 111 is adjusted. It is to be noted that the pipecutter 100 can also use the mains as an energy source. In this example, the motor 111 is an electric motor. It is to be noted that the cutting portion 210 includes at least the cutting blade 143.

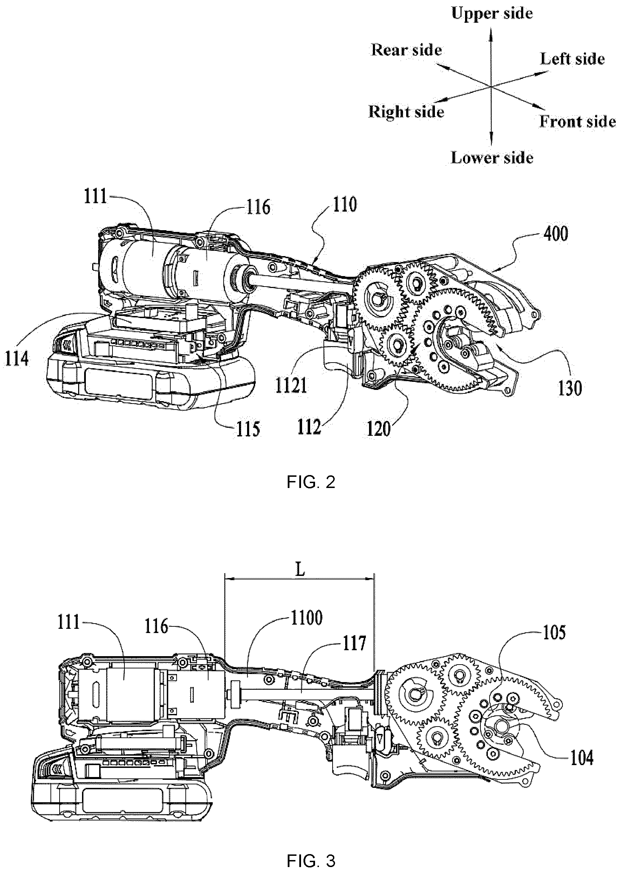

As shown in FIG. 2, a gear assembly on the right side of the cutting portion 210 is the first drive assembly 120, and the first drive assembly 120 is wrapped by the housing 110. The output shaft 117 extends out of the gearbox 116 to the cutting portion 210. The first drive assembly 120 is activated by the rotating output shaft 117 to drive the rotating assembly 130 to rotate.

As shown in FIGS. 3 and 4, the pipe 104 to be cut is placed in a region surrounded by the cutting blade 143, a first roller 151, and a second roller 152 of the rotating assembly 130, and the rotating assembly 130 rotates substantially around the central axis of the pipe 104 to be cut when it is clamped in the cutting portion 210. When the rotating assembly 130 rotates, the cutting blade 143 cuts around the outer surface of the pipe 104 and finally cuts through the pipe 104. In the cutting operation, the first roller 151 and the second roller 152 roll on the pipe 104 to be cut to prevent the pipe 104 to be cut from being excessively rubbed.

As shown in FIG. 4, the first drive assembly 120 includes a first mounting plate 128, and a first gear 121, a second gear 122, and a third gear 123 are mounted on the first mounting plate 128. The rotating output shaft 117 drives the first gear 121 to rotate, and the rotational motion is transmitted to a fourth gear 124 via the second gear 122 and the third gear 123. The fourth gear 124 is fixed to the rotating assembly 130 by screws 127. When the fourth gear 124 rotates, the rotating assembly 130 rotates synchronously with the fourth gear 124.

In this example, the first gear 121 is driven by a drive block 125 to rotate. FIGS. 5A to 5C show different positions to which the drive block 125 is possible to rotate. The drive block 125 is disposed so that the rotation of the first gear 121 can lag behind the rotation of the drive block 125. The drive block 125 may rotate inside the first gear 121. The first gear 121 has a boss 1211. When a protrusion of the drive block 125 is not in contact with the boss 1211 of the first gear 121, the drive block 125 does not drive the first gear 121 to rotate, and the drive block 125 is in an idle stroke.

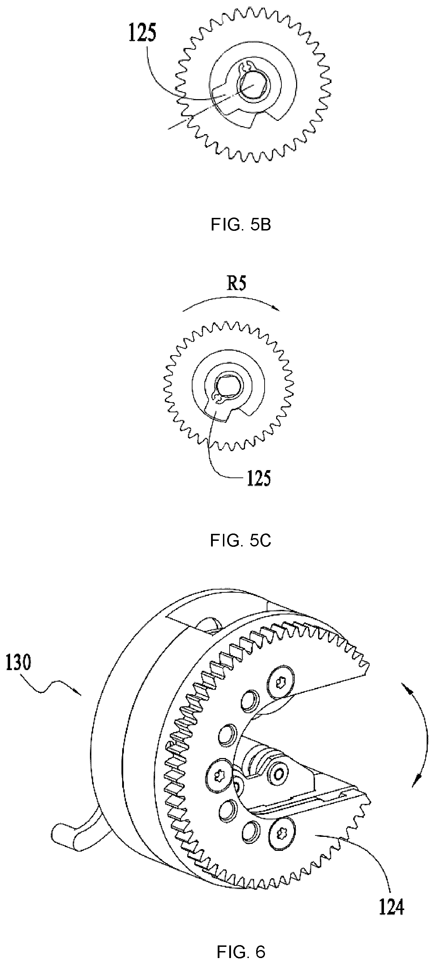

With FIGS. 5A to 5C as an example, the drive block 125 in FIG. 5A is in an initial state; when the drive block 125 rotates in a first direction R1 to a drive block 125b in FIG. 5B, the protrusion of the drive block 125 remains in non-contact with the boss 1211 and in this process, the first gear 121 is not driven by the rotating drive block. When the drive block 125b in FIG. 5B continues to move in the first direction R1 to the drive block 125 in FIG. 5C, the protrusion of the drive block 125 begins to be in contact with the boss 1211 to drive the first gear 121 to rotate. End portions of the first gear 121, the second gear 122, and the third gear 123 are each fixed by a circlip 126.

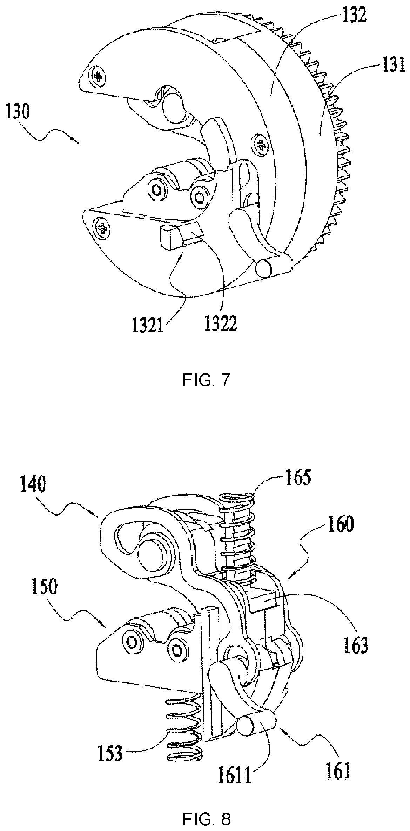

As shown in FIGS. 6 and 7, the rotating assembly 130 includes a first housing 131 and a second housing 132, where the first housing 131 is located on the right side of the second housing 132. Since the first housing 131 is fixed to the fourth gear 124, when the first drive assembly 120 drives the fourth gear 124 to rotate, the rotating assembly 130 rotates synchronously with the fourth gear 124.

As shown in FIGS. 8 to 10, bracket assemblies and a locking assembly 160 are accommodated in an accommodation space formed by the first housing 131 and the second housing 132 of the rotating assembly 130. In an example, the bracket assemblies include a first bracket assembly 140 and a second bracket assembly 150. The first bracket assembly 140 is located above the second bracket assembly 150, and the locking assembly 160 connects the first bracket assembly 140 to the second bracket assembly 150. The locking assembly 160 is "locked" so that the first bracket assembly 140 and the second bracket assembly 150 jointly clamp the pipe 104, thereby preventing the pipe 104 from being loosened during cutting. The first bracket assembly 140 and the second bracket assembly 150 form a cutting region 105 (see FIG. 3), the pipe 104 to be cut is placed in the cutting region 105, and the rotating assembly 130 can drive the cutting blade 143 to perform rotary cutting on the pipe 104. It is to be understood that the cutting region 105 shown in FIG. 3 is merely a rough schematic region and represents a maximum range of a region where the first bracket assembly 140 and the second bracket assembly 150 can perform cutting.

Elastic members are provided so that the first bracket assembly 140 and the second bracket assembly 150 can approach each other to clamp the pipe 104. As shown in FIG. 8, the second bracket assembly 150 includes a first elastic member 153, and the first elastic member 153 can make the second bracket assembly 150 approach the first bracket assembly 140. In this example, the first elastic member 153 is a spring. When the pipe 104 is mounted into the cutting portion 210, the pipe 104 presses the second bracket assembly 150 downwards and the first elastic member 153 is compressed. After the pipe 104 is mounted between the first bracket assembly 140 and the second bracket assembly 150, under the action of the first elastic member 153, the second bracket assembly 150 approaches the first bracket assembly 140 to clamp the pipe 104. To ensure the stability of movement of the second bracket assembly 150 and prevent the second bracket assembly 150 from moving excessively towards the first bracket assembly 140, a second elastic member 165 is further provided. One end of the first elastic member 153 abuts against the rotating assembly 130 and the other end of the first elastic member 153 abuts against the second bracket assembly 150. One end of the second elastic member 165 abuts against the rotating assembly 130 and the other end of the second elastic member 165 abuts against the first bracket assembly 140. The second elastic member 165 is sleeved on a locking plate 164.

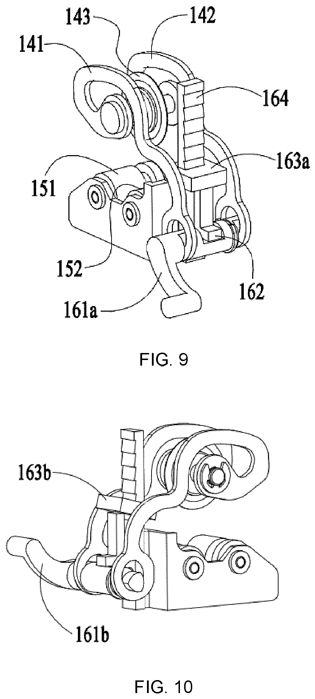

As shown in FIGS. 9 and 10, the first bracket assembly 140 includes a first support frame 141, a second support frame 142, and the cutting blade 143 mounted between the two support frames. The locking assembly 160 includes a rocker arm 161, a push rod 162, a locking block 163, and the locking plate 164. A side of the locking plate 164 is serrated. When an extension direction of the locking plate 164 is substantially perpendicular to an extension direction of the locking block 163, an opening of the locking block 163 allows the locking plate 164 to move up and down. When the locking block 163 is pushed by the push rod 162 to tilt, the locking block 163 can be stuck on a serration on the locking plate 164 so that the second bracket assembly 150 is fixed relative to the first bracket assembly 140 and the second bracket assembly 150 is locked.

As shown in FIG. 9, a rocker arm 161a is at a release position, and the extension direction of the locking plate 164 is substantially perpendicular to the extension direction of the locking block 163. When the rocker arm 161a is toggled to a locking position shown in FIG. 10, a rocker arm 161b pushes up the bottom surface of the push rod 162 and the push rod 162 further pushes a locking block 163a to 163b so that the angle between the extension direction of the locking plate 164 and the extension direction of the locking block 163 is less than 90°. In this state, the locking block 163 and the locking plate 164 are locked to each other, the locking block 163 can no longer move upward, and the second bracket 150 and the first bracket assembly 140 are relatively stationary.

It is to be noted that the locking plate 164 may be connected to the first bracket assembly 140 or the second bracket assembly 150 or may be integrally formed with the first bracket assembly 140 or the second bracket assembly 150.

As shown in FIG. 11, the cutting portion 210 of the pipecutter 100 is further divided into the first drive assembly 120 and the rotating assembly 130 described above and an output shaft assembly 300 and the second drive assembly 400 described below. The output shaft assembly 300 drives the second drive assembly 400 to rotate to drive the rocker arm 161 on the rotating assembly 130 to rotate, thereby achieving the locking and pressurization of the locking assembly 160. The first drive assembly 120 and the second drive assembly 400 are disposed on two sides of the rotating assembly 130.

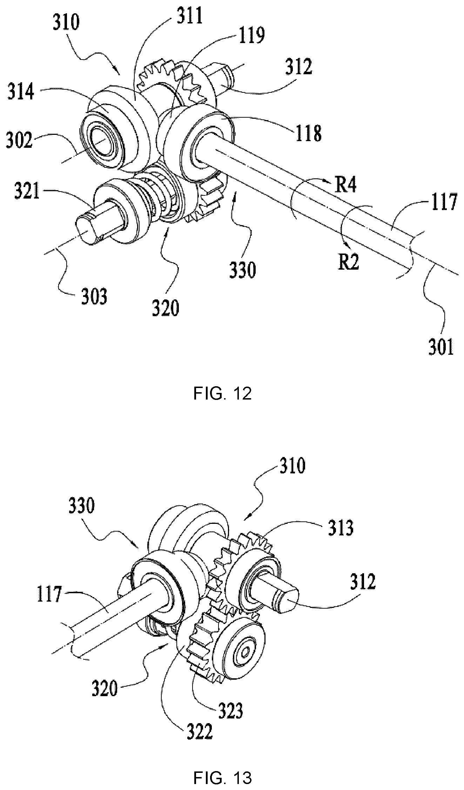

FIGS. 12 and 13 disclose an example of the output shaft assembly 300. The output shaft assembly 300 is accommodated in a housing structure. In this example, the output shaft 117 extends in a direction of a first straight line 301, a first drive shaft 312 extends in a direction of a second straight line 302, and a second drive shaft 321 extends in a direction of a third straight line 303. The first straight line 301 is substantially perpendicular to the second straight line 302 and the third straight line 303, and the second straight line 302 is substantially parallel to the third straight line 303. The first drive shaft 312 drives the first drive assembly 120 to move, and the second drive shaft 321 drives the second drive assembly 400 to move.

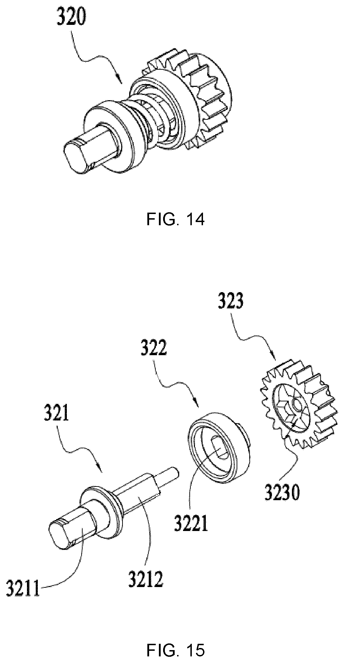

The output shaft assembly 300 includes a first assembly 310, a second assembly 320, and a third assembly 330. The first drive shaft 312, a sixth gear 311, and a seventh gear 313 are assembled into the first assembly 310. The second drive shaft 321 and an eighth gear 323 are assembled into the second assembly 320. The output shaft 117 and a fifth gear 119 are assembled into the third assembly 330. An end of the output shaft 117 is connected to the fifth gear 119, the fifth gear 119 meshes with the sixth gear 311 to drive the drive block 125 mating with the first drive shaft 312 to rotate, and the drive block 125 drives the first gear 121 to rotate. The seventh gear 313 rotates along with the first drive shaft 312 to drive the eighth gear 323 to rotate. A first bearing 118 is disposed at the end of the output shaft 117, and a second bearing 314 is disposed on the outer side of the second gear 311. The second assembly 320 may also be referred to as a gear skipping assembly or a clutch assembly, and the specific structure of the second assembly 320 is shown in FIGS. 14 to 16.

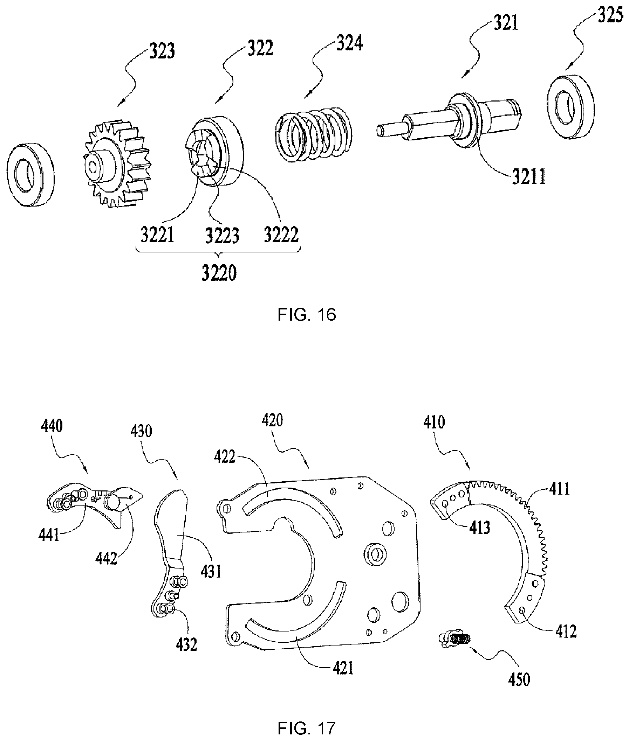

FIGS. 15 and 16 are exploded views of the second assembly 320 from two angles. In FIG. 15, a third elastic member 324 and two bearings at two ends of the second drive shaft 321 are omitted.

As shown in FIG. 15, a first end portion 3211 with flat positions is provided on a side of the second drive shaft 321, and the first end portion 3211 is connected to a ninth gear 401 (see FIG. 11) on the outer side of the second drive assembly 400. A second end portion 3212 with flat positions is provided on the other side of the second drive shaft 321, and the second end portion 3212 drives a rotating member 322 to rotate. As shown in FIG. 16, the rotating member 322 has an uneven surface on a side. In this example, the rotating member 322 includes a raised surface 3221 that protrudes, a recessed surface 3222 that is indented is disposed between two adjacent raised surfaces 3221, and the raised surface 3221 and the recessed surface 3222 that are adjacent to each other are connected by a transition surface 3223. As shown in FIG. 15, an uneven structure similar to that of the rotating member 322 is provided on a side of the eighth gear 323 mating with the rotating member 322, which is not described in detail here. The third elastic member 324 is disposed between a stop portion 3211 and the rotating member 322 so that a first uneven surface 3220 of the rotating member 322 is substantially matched with a second uneven surface 3230 of the eighth gear 323 to transmit torque.

FIGS. 17 to 19 disclose the specific structure of the second drive assembly 400. A ring gear 410 is mounted on a side of a second mounting plate 420, and a first pushing assembly 430 and a second pushing assembly 440 are mounted on the other side of the second mounting plate 420. In this example, the first pushing assembly 430 includes a first pushing member 431, and first connectors 432 of the first pushing member 431 penetrate through first holes 412 on the ring gear 410 to achieve fastening. In this example, two first connectors 432 and two first holes 412 are provided. In other examples, multiple first connectors 432 and/or multiple first holes 412 may be provided. When the ring gear 410 rotates, the first pushing member 431 rotates synchronously with the ring gear 410.

As shown in FIG. 17, the second mounting plate 420 has a first track 421 and a second track 422. The first pushing assembly 430 moves along the first track 421 and the second pushing assembly 440 moves along the second track 422.

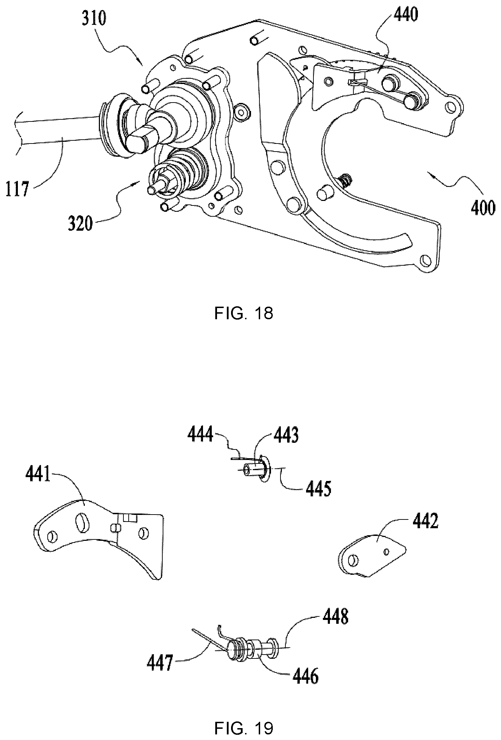

As shown in FIG. 19, the second pushing assembly 440 includes a second pushing member 441 and a third pushing member 442. The second pushing member 441 and the third pushing member 442 are connected to each other by a second connector 443 so that the third pushing member 442 can rotate around a second axis 445 of the second connector 443. The second pushing member 441 is connected to the ring gear 410 by third connectors 446 so that the second pushing member 441 can rotate synchronously with the ring gear 410. In this example, two third connectors 446 are provided. Therefore, when the ring gear 410 rotates, the first pushing member 431 and the second pushing member 441 rotate synchronously with the ring gear 410. The second pushing assembly 440 further includes a first torsion spring 447 and a second torsion spring 444.

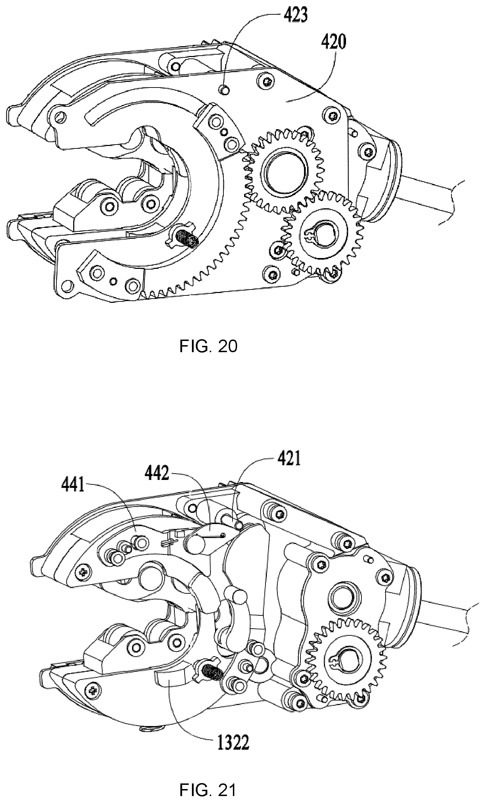

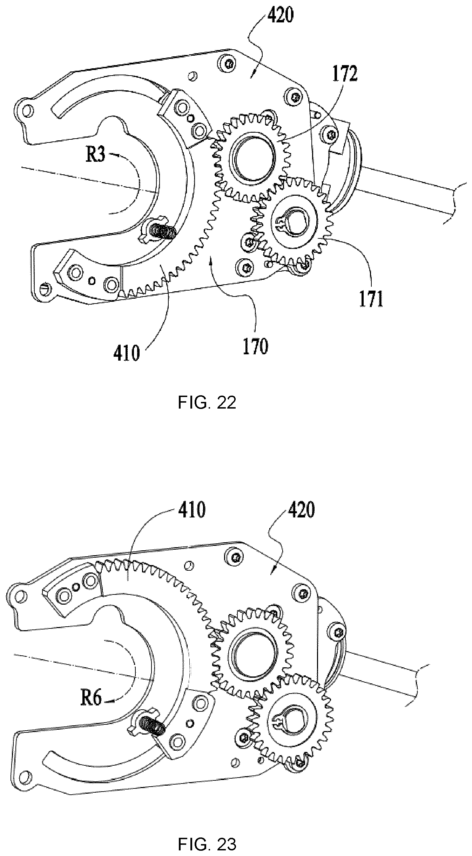

FIG. 20 is a perspective view of assembly of the structures in FIG. 11. In conjunction with FIGS. 11, 20, and 21, a column 423 is disposed between the first mounting plate 128 and the second mounting plate 420. **In** one aspect, the column 423 enables the installation personnel to quickly and accurately position the second mounting plate 420 during assembly. **In** the other aspect, the column 423 limits a rotation angle of the third pushing member 442. A more detailed description is given below in conjunction with FIGS. 22 to 27.

A locking process of the pipecutter 100 is described below.

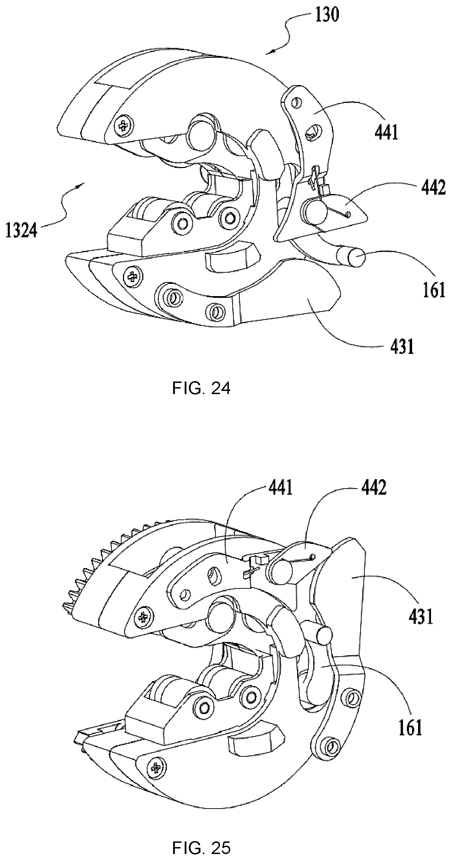

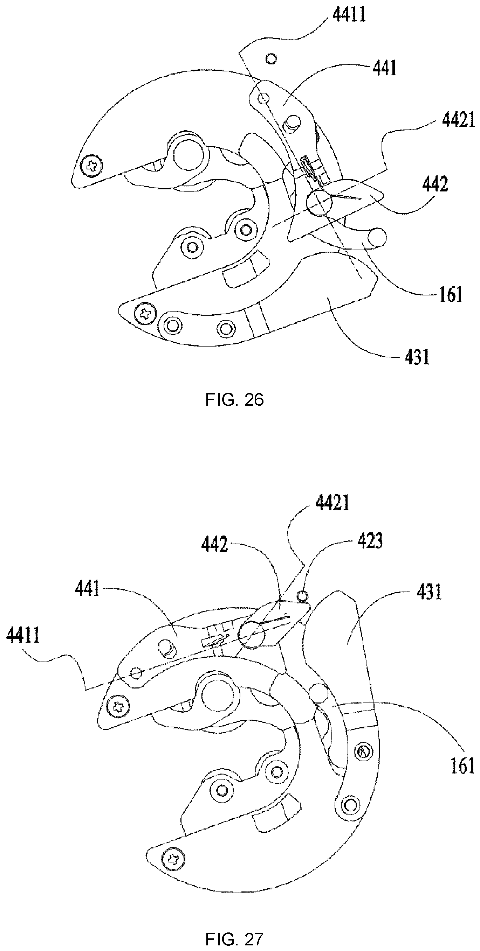

FIGS. 22 to 27 disclose a process of locking and pressurization of the rotating assembly 130 through a change of the second drive assembly 400. FIGS. 22 and 23 show a first position and a second position to which the ring gear 410 can move relative to the second mounting plate 420. FIGS. 24 and 25 are schematic views showing positions to which the rocker arm 161 is pushed when the ring gear 410 moves to the first position and the second position according to FIGS. 22 and 23, respectively. FIGS. 26 and 27 are left views of FIGS. 24 and 25, respectively.

**In** conjunction with the output shaft assembly 300 shown in FIGS. 11 to 16, the motor 111 is started from stillness and drives the output shaft 117 to rotate along a second direction R2 (see FIG. 11), the ring gear 410 starts to rotate in a third direction R3 (see FIG. 22), and the rotating ring gear 410 drives the first pushing member 431 to rotate to drive the outer end of the rocker arm 161 to move upward to implement a locking function. As shown in FIGS. 22 to 25, in the process from unlocking to locking, the ring gear 410 rotates from the first position shown in FIG. 22 to the second position shown in FIG. 23, and the rocker arm 161 is toggled from an unlocking position shown in FIG. 24 to a locking position shown in FIG. 25.

It is to be noted that when subjected to no additional thrust, the second pushing member 441 and the third pushing member 442 in the second pushing assembly 440 are in a state shown in FIG. 24. That is to say, in a natural state (as shown in FIG. 26), the third pushing member 442 is subjected to a force from the torsion spring so that the angle between the third pushing member 442 and the second pushing member 441 is approximately a right angle. However, as shown in FIGS. 21, 25, and 27, when the first pushing member 431 rotates along with the ring gear 410, the second pushing member 441 also rotates along with the ring gear 410, and the third pushing member 442 encounters the column 423 during upward movement so that the third pushing member 442 is "blocked" by the column 423 and does not rise above the top of the housing of the cutting portion 210. In this case, the angle between the second pushing member 441 and the third pushing member 442 gradually increases. Specifically, as shown in FIG. 26, the second pushing member 441 extends in a direction of a first extension line 4411, and the third pushing member 442 extends in a direction of a second extension line 4421. From the position shown in FIG. 26 to the position shown in FIG. 27, the angle between the first extension line 4411 and the second extension line 4421 increases, that is, the angle between the second pushing member 441 and the third pushing member 442 increases. When the second pushing member 441 rotates along with the ring gear, the third pushing member 442 gradually leaves the column 423, the angle between the second pushing member 441 and the third pushing member 442 gradually decreases, and the second pushing member 441 and the third pushing member 442 return to the natural state.

In conjunction with FIGS. 4 to 5C, when the rocker arm 161 is toggled from the unlocking position (FIG. 24) to the locking position (FIG. 25), the drive block 125 rotates in the first direction R1 from the position in FIG. 5A to the position in FIG. 5B. When the drive block 125 is in the idle stroke, the first gear 121 is not driven to rotate by the motor 111. As the motor 111 continues to rotate, the drive block 125 continues to rotate in the first direction R1 from the position in FIG. 5B to the position in FIG. 5C to drive the first gear 121 to start rotating.

When the rocker arm 161 is toggled from the unlocking position shown in FIG. 24 to the locking position shown in FIG. 25, due to a limitation of the first track 421 or the second track 422 (see FIG. 17), the rotation relative to the rotating assembly 130 cannot be continued. However, the motor 111 is still rotating in the second direction R2, the second assembly 320 is activated, the ring gear 410 is kept at the locking position shown in FIG. 23, and the second assembly 320 repeats a gear skipping action as a clutch.

An unlocking process of the pipecutter 100 is described below.

After the cutting process ends, the rotating assembly 130 stops, an opening 1324 (see FIG. 24) of the rotating assembly 130 may face any direction, and the rocker arm 161 may stop at multiple positions.

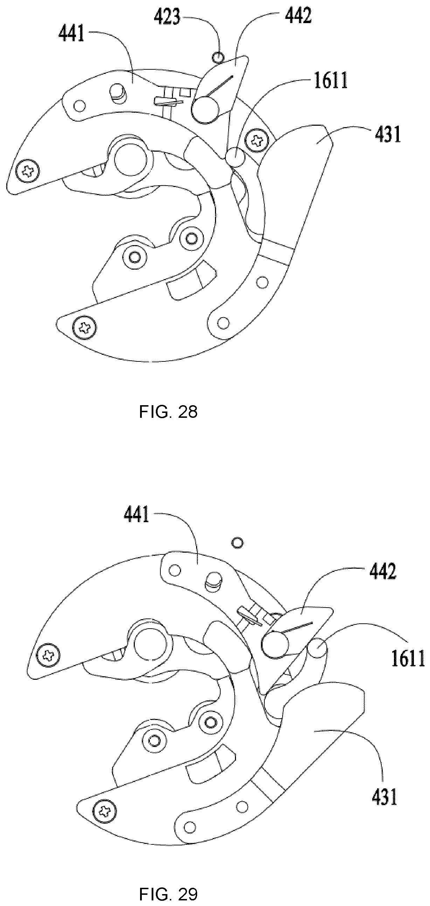

As shown in FIGS. 28 and 29, as a possible case, the rocker arm 161 stops at a position on a path of movement of the second drive assembly 400 in a sixth direction R6 (see FIG. 23). In this case, in the unlocking process, the ring gear 410 moves from the second position (see FIG. 23) to the first position (see FIG. 22), and the first pushing assembly 430 and the second pushing assembly 440 push the rocker arm 161 to move to a position shown in FIG. 29 to achieve unlocking. Then, the ring gear 410 is limited by the first track 421 or the second track 422 (see FIG. 17) and cannot continue to rotate along the sixth direction R6 (see FIG. 23), and the clutch assembly (that is, the second assembly 320) is activated.

In the unlocking process, the motor 111 drives the output shaft 117 to rotate in a fourth direction R4 opposite to the second direction R2, which may also be referred to as reverse rotation. As shown in FIG. 5C, when the motor 111 rotates reversely, the drive block 125 rotates in a fifth direction R5 opposite to the first direction R1. When the drive block 125 rotates from the position in FIG. 5C to the position in FIG. 5A, the drive block 125 is in the idle stroke and the first gear 121 is not driven to rotate. As shown in FIG. 23, the ring gear 410 rotates in the sixth direction R6 opposite to the third direction R3 from the second position to the first position shown in FIG. 22.

FIGS. 27 to 31 are side views showing that the rocker arm 161 is toggled from the locking position to the unlocking position. As shown in FIG. 28, the third pushing member 442 gradually leaves the column 423, and a side of the second pushing member 441 abuts against an outer circumference 1611 of the rocker arm 161 (see FIG. 8) and pushes the rocker arm 161 to rotate. As shown in FIG. 29, the third pushing member 442 completely leaves the column 423, and the third pushing member 442 returns to its natural state and depresses the rocker arm 161 so that the locking assembly 160 is unlocked.

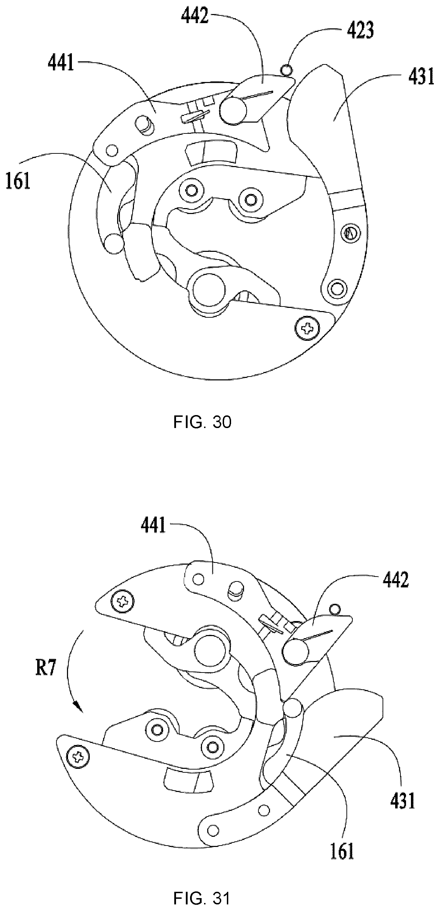

As another possible case, the rocker arm 161 stops at a stop position shown in FIG. 30. In this case, the second drive assembly 400 moves in the sixth direction R6 to the boundary of the first track 421. When the second drive assembly 400 stops, the second drive assembly 400 reaches the position shown in FIG. 22 but cannot go past the stop position of the rocker arm 161 and thus cannot trigger the movement of the rocker arm 161. The second assembly 320 repeats the gear skipping action, and the rotating assembly 130 rotates in a seventh direction R7 (as shown in FIG. 31). The outer circumference 1611 of the rocker arm 161 is in contact with and pushes the second pushing member 441 to achieve unlocking.

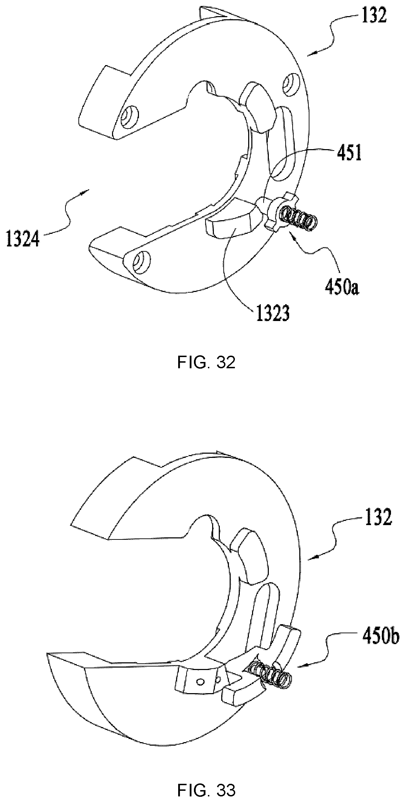

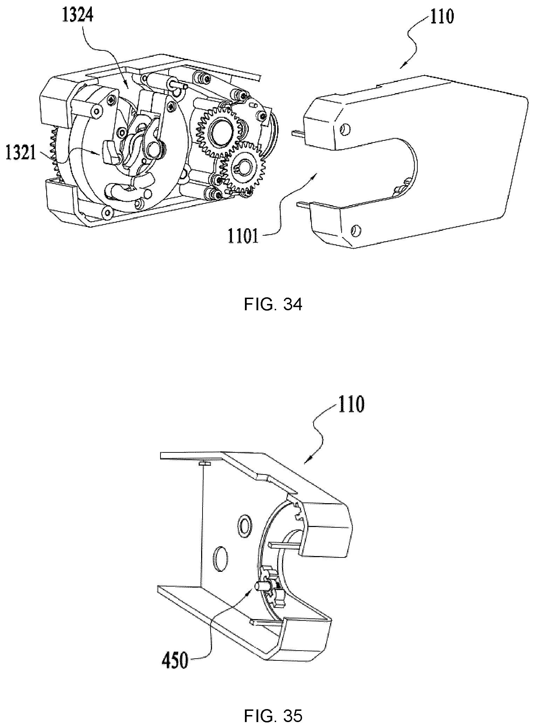

As shown in FIGS. 32 and 33, when the cutting operation is completed and the pipe 104 is still locked in the cutting portion 210, the operator changes the rotation direction of the motor 111 by operating the switch 112 and the toggle 1121. Before the pipecutter 100 is unlocked, the operator has released the switch 112 for controlling the motor 111 to start and stop, and the rotating assembly 130 stops rotating. At this time, the opening 1324 of the rotating assembly 130 may stop and face any direction. As shown in FIG. 34, the opening 1324 may face upward, and the pipe 104 cannot be taken out. Therefore, a rotation stop portion 1321 is provided on the second housing 132. The rotation stop portion 1321 is to limit a position to which the rotation of the rotating assembly 130 stops so that the opening 1324 of the rotating assembly 130 is aligned with an opening 1101 of the housing 110.

As shown in FIGS. 7, 32, and 33, the rotation stop portion 1321 is provided with a rotation stop surface 1322 and an inclined surface 1323. As shown in FIG. 35, a stopper 450 is disposed in a limiting groove of the housing 110 and thus is fixed in position. When the rotating assembly 130 rotates in the third direction R3 (see FIG. 22), the second housing 132 is blocked by the stopper 450 and can only rotate to a position shown in FIG. 32. At this position, the opening 1324 of the rotating assembly 130 is aligned with the opening 1101 of the housing 110. When the rotating assembly 130 rotates in the sixth direction R6 (see FIG. 23), a stop head 451 of the stopper 450 slides on the inclined surface 1323 on the second housing 132. Therefore, when the motor 111 rotates forward, the stopper 450 does not prevent the rotation of the rotating assembly 130.

FIG. 32 discloses an example of the stopper 450, that is, a stopper 450a. FIG. 33 discloses another example of the stopper 450, that is, a stopper 450b. The stopper 450 includes a spring so that the stop head 451 can move along an axial direction of the spring.

It is to be noted that in the examples disclosed in the present invention, the motor 111 can drive both the first drive assembly 120 and the second drive assembly 400.

As shown in FIG. 3, one end of the output shaft 117 is connected to the cutting portion 210 and the other end of the output shaft 117 is connected to a power portion 215. In other words, one end of the output shaft 117 is connected to the rotating assembly 300 that drives the cutting blade 143 to rotate, and the other end of the output shaft 117 is connected to a gear reduction mechanism in the gearbox 116. The grip 220 is formed by a portion of the housing 110 that wraps the output shaft 117 and the switch 112.

In this example, the grip 220 is located between the cutting portion 210 and the battery pack coupling portion 115, the grip 220 is located between the cutting portion 210 and the gearbox 116, and the grip 220 is located between the cutting portion 210 and the motor 111. The output shaft 117 is a long shaft. A first distance L of the output shaft 117 between the gearbox 116 and the first bearing 118 is greater than or equal to 80 mm and less than or equal to 115 mm.

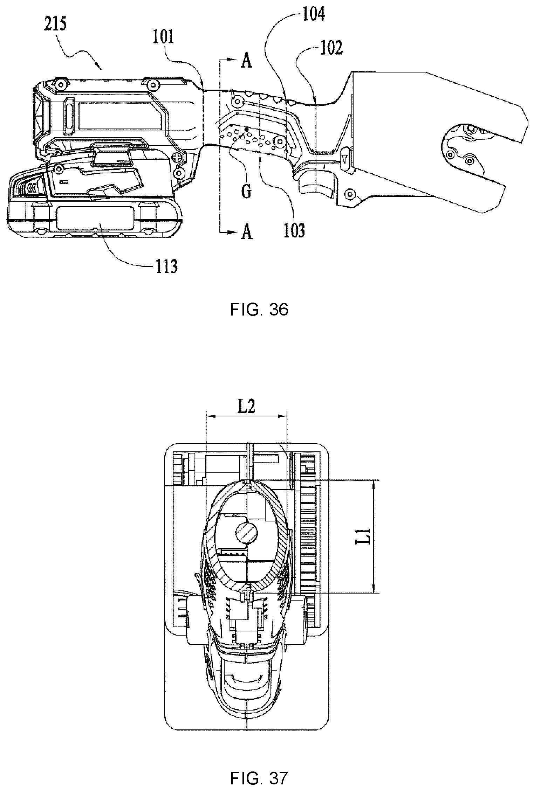

As shown in FIG. 36, when the battery pack 113 is mounted to the pipecutter 100, the overall center of gravity G of the pipecutter 100 is located in a holding region 221 of the grip 220. The pipecutter 100 disclosed in the present invention is in the shape of a "dumbbell", the cutting portion 210 on the front side and the power portion 215 on the rear side like two ends of the dumbbell where the weight is concentrated, and the grip 220 is disposed between the cutting portion 210 and the power portion 215 so that the operator easily obtains relatively good experience when holding the pipecutter 100, a wrist of the operator is prevented from an excessive load due to too heavy a front portion of the whole machine, and the whole machine is easier to control.

The outer circumference of a first line 101 at the rear end of the grip 220 is greater than or equal to 100 mm and less than or equal to 140 mm, where the first line 101 is outside a region where the switch 112 is located. A second line 102 is substantially located at the center of the switch 112. Therefore, the outer circumference of the second line 102 includes a portion of the switch 112 that needs to be pressed by a finger, and the outer circumference of the second line 102 is greater than or equal to 140 mm and less than or equal to 175 mm. The outer circumference of a third line 103 in the middle of the grip 220 is greater than or equal to 115 mm and less than or equal to 145 mm, where the third line 103 is located at a midpoint between the first line 101 and the second line 102 in a front and rear direction.

FIG. 37 is a sectional view of FIG. 36 along A-A. A major diameter of the housing section is L1 and a minor diameter of the housing section is L2. A fourth line 104 is located at the most front end of a portion of the grip 220 excluding the switch 112. In an example, when the section A-A is located between the first line 101 and the fourth line 104, the major diameter L1 is greater than or equal to 35 mm and less than or equal to 47 mm and the minor diameter L2 is greater than or equal to 25 mm and less than or equal to 37 mm. Therefore, the structure disclosed in the present invention enables the grip 220 to have a relatively small outer circumference so that the grip 220 is relatively thin in an up and down direction and a left and right direction and is convenient for the operator to hold.

It is to be noted that the holding region 221 of the grip 220 where the overall center of gravity G of the pipecutter 100 is located refers to a region covered by a hand of the operator holding the pipecutter 100 when the finger of the operator presses the switch 112. That is to say, if the hand of the operator holds another position of the pipecutter 100 without pressing the switch 112, such as a housing region outside the motor 111 or a position where the battery pack 113 is located, these regions do not fall within the scope of the holding region 221 disclosed in the present invention. If the battery pack coupling portion 115 partially overlaps the holding region when the switch 112 is pressed, the battery pack coupling portion 115 falls within the scope disclosed in the present invention.

The nominal voltage of the battery pack 113 of the pipecutter 100 is greater than or equal to 10.8 V and less than or equal to 36 V, where the nominal voltage is a voltage value displayed on the product manual or outer packaging of the battery pack 113. Table 1 shows current test data when the nominal voltage of the battery pack 113 is 24 V. Table 2 shows power calculation data when the nominal voltage of the battery pack 113 is 24 V.

**Table 1**

| Pipe Diameter (in) | Cutting Duration (s) | Maximum Instantaneous Current at Startup (A) | Average Current in the First 1/3 (A) | Average Current in the Middle 1/3 (A) | Average Power Current in the Last 1/3 (A) | Average Current in the Whole Cutting Duration (A) |
|---|---|---|---|---|---|---|
| 1 | 23.72 | 113.4 | 6.633 | 9.076 | 6.611 | 4.037 |
| 3/4 | 16.64 | 126.9 | 6.489 | 9.092 | 5.855 | 3.894 |
| 5/8 | 12.2 | 88.8 | 5.125 | 7.162 | 5.178 | 3.118 |
| 1/2 | 9 | 64.8 | 5.449 | 7.253 | 5.531 | 3.437 |
| 3/8 | 10.56 | 41.72 | 4.269 | 5.924 | 4.118 | 2.976 |

**Table 2**

| Pipe Diameter (in) | Cutting Duration (s) | Maximum Instantaneous Power at Startup (A) | Average Power in the First 1/3 (W) | Average Power in the Middle 1/3 (W) | Average Power in the Last 1/3 (W) | Average Power in the Whole Cutting Duration (W) |
|---|---|---|---|---|---|---|
| 1 | 23.72 | 113.4 | 217.8 | 158.7 | 96.9 | 159.2 |
| 3/4 | 16.64 | 126.9 | 218.2 | 140.5 | 93.5 | 155.7 |
| 5/8 | 12.2 | 88.8 | 171.9 | 124.3 | 74.8 | 123.0 |
| 1/2 | 9 | 64.8 | 174.1 | 132.7 | 82.5 | 130.8 |
| 3/8 | 10.56 | 41.72 | 142.2 | 98.8 | 71.4 | 102.5 |

In Table 1, the pipe diameter refers to a nominal diameter of a copper pipe to be cut, and the unit is the inch. The nominal diameter here is not the outer diameter of the pipe, and the outer diameter of the pipe is 1/8 inch larger than the nominal diameter. The cutting duration refers to a total time required for completely cutting the copper pipe, and the unit is the second. The maximum instantaneous current at startup is a maximum current that the motor can reach when initially started, and the maximum current is an instantaneous value. The cutting duration for cutting one pipe is divided into three equal parts. The average current in the first 1/3 refers to an average value of the current of the pipecutter 100 in the first 1/3 of the cutting duration. The average current in the middle 1/3 refers to an average value of the current of the pipecutter 100 in the middle 1/3 of the cutting duration. The average current in the last 1/3 refers to an average value of the current of the pipecutter 100 in the last 1/3 of the cutting duration.

The meanings of the parameters in Table 2 are similar to those in Table 1 and are not described in detail here. The power value in Table 2 is obtained by multiplying the current value in Table 1 by the nominal voltage 24 V of the battery pack 113. As can be seen from Table 2, when five pipes 104 with different diameters are cut, the average power of the pipecutter 100 in the whole cutting duration increases from 102.5 W to 159.2 W. The average power of the pipecutter 100 disclosed in the present invention is greater than or equal to 100 W.

A control method involved in the locking process of the pipecutter 100 is described below.

The pipecutter 100 may be configured with a control assembly. The control assembly can detect whether the switch 112 on the grip 220 is turned on and detect the rotation direction of the motor 111 indicated by the toggle 1121 after being turned.

In the locking process of the pipecutter 100 described above, as a user turns the toggle 1121 to a forward rotation direction and turns on the switch 112 on the grip, the control assembly may control the motor 111 to rotate forward, the ring gear 410 rotates relative to the second mounting plate 420 from the first position shown in FIG. 22 to the second position shown in FIG. 23, and the outer end of the rocker arm 161 is driven by the first pushing member 431 to be lifted from the unlocking position shown in FIG. 24 to the locking position shown in FIG. 25, thereby implementing the locking function. Only after being in contact with the boss 1211, can the drive block 125 drive the first gear 121 to rotate to drive the rotating assembly 130. Therefore, before the locking is completed, the drive block 125 is in the idle stroke. Only after the ring gear 410 stops due to the limitation of the first track 421 and/or the second track 422 and the second assembly 320 repeats the gear skipping action as the clutch, can the rotating assembly 130 drive the cutting blade 143 to rotate forward to perform the rotary cutting on the pipe 104.

A control method involved in the unlocking process of the pipecutter 100 is described below.

In the unlocking process of the pipecutter 100 described above, as the user turns the toggle 1121 to a reverse rotation direction and turns on the switch 112 on the grip, the control assembly may control the motor 111 to rotate reversely, and the ring gear 410 rotates relative to the second mounting plate 420 from the second position shown in FIG. 23 to the first position shown in FIG. 22. Only after being in contact with the boss 1211, can the drive block 125 drive the first gear 121 to rotate to drive the rotating assembly 130. Therefore, only after the ring gear 410 stops due to the limitation of the first track 421 and/or the second track 422 and the second assembly 320 repeats the gear skipping action as the clutch, can the rotating assembly 130 rotate reversely so that the outer end of the rocker arm 161 that rotates along with the rotating assembly 130 is driven by the second pushing member 441 to be lowered from the locking position shown in FIG. 25 to the unlocking position shown in FIG. 24, thereby implementing an unlocking function. In addition, the rotating assembly 130 stops rotating after being blocked by the stopper 450.

A control method involved in a shutdown process of the pipecutter 100 is described below.

The pipecutter 100 may be further configured with a parameter detection assembly. The parameter detection assembly may include a position sensor, and the position sensor can measure a position parameter of the rotating assembly 130 such as an angle and transmit the measured position parameter to the control assembly. In an example, the position sensor is a Hall sensor mounted on a component fixed in position, such as the first mounting plate 128. Meanwhile, the rotating assembly 130 is equipped with a magnet for the Hall sensor to sense a current position of the rotating assembly 130.

In the locking process of the pipecutter 100 described above, the toggle 1121 is turned to the forward rotation direction. As the user turns off the switch 112, the control assembly may control the motor 111 to continue to rotate forward, detect, based on the position parameter transmitted by the parameter detection assembly, whether the rotating assembly 130 is at a first target position, and control the motor 111 to stop in the case where the rotating assembly 130 is at the first target position or the switch 112 has been turned off by the user for a first preset duration. In an example, when the rotating assembly 130 is at the first target position, an opening direction of the rotating assembly 130 is staggered from an opening direction of the first mounting plate 128 and the second mounting plate 420, which are at a first preset angle. The first preset angle may be 90°, that is, the opening direction of the rotating assembly 130 is perpendicular to the opening direction of the first mounting plate 128 and the second mounting plate 420 so that before the machine is unlocked, the pipe 104 is prevented from being disengaged from the pipecutter 100 to cause an accidental danger.

In the unlocking process of the pipecutter 100 described above, the toggle 1121 is turned to the reverse rotation direction. As the user turns off the switch 112, as an example, the rotating assembly 130 that rotates reversely has stopped at a second target position after being blocked by the stopper 450 so that the control assembly can control the motor 111 to stop. In an example, when the rotating assembly 130 is at the second target position, the opening direction of the rotating assembly 130 is consistent with the opening direction of the first mounting plate 128 and the second mounting plate 420 so that after the machine is unlocked, the user can easily take the cut pipe 104 out of the pipecutter 100.

As another example, if the stopper 450 is not used to block and stop the rotating assembly 130, the control assembly may control the motor 111 to continue to rotate reversely, detect, based on the position parameter transmitted by the parameter detection assembly, whether the rotating assembly 130 is at the second target position, and control the motor 111 to stop in the case where the rotating assembly 130 is at the second target position or the switch 112 has been turned off by the user for the first preset duration.

A control method involved in a self-protection process of the pipecutter 100 is described below.

The parameter detection assembly configured in the pipecutter 100 can also detect parameters of the preceding battery pack 113, such as voltage, current, and temperature, and transmit the measured parameters to the control assembly. The control assembly may perform one or more of undervoltage protection, overcurrent protection, and overtemperature protection on the pipecutter based on the parameters transmitted by the parameter detection assembly.

As an example, the control assembly may detect whether a voltage parameter of the battery pack 113 is a first target voltage value and if so, control the motor 111 to stop.

As another example, the control assembly may detect whether the voltage parameter of the battery pack 113 is the first target voltage value and if so, further determine a current state of the motor 111 and perform a corresponding operation on the motor 111 according to the current state of the motor 111. In an example, in the case where it is detected that the voltage of the battery pack 113 is 2.5 V/cell and the motor 111 is in operation, the motor 111 is controlled to stop. In another example, in the case where it is detected that the voltage of the battery pack 113 is 2.5 V/cell and the motor 111 is to be started to rotate forward, the motor 111 is controlled to stop. In the case where it is detected that the voltage of the battery pack 113 is 2.5 V/cell and the motor 111 is to be started to rotate reversely, the motor 111 is controlled to rotate reversely a preset number of times or rotate reversely for a second preset duration, and then the motor 111 is controlled to stop.

The basic principles, main features, and advantages of this invention are shown and described above. It is to be understood by those skilled in the art that the aforementioned examples do not limit the present invention in any form, and all technical solutions obtained through equivalent substitutions or equivalent transformations fall within the scope of the present invention.

## Claims

1. A pipecutter (100), comprising:
a housing (110) forming an accommodation space (1100);
a motor (111) disposed in the housing;
a rotating assembly (130) comprising bracket assemblies and a locking assembly (160), wherein a cutting blade (143) for cutting is disposed on the bracket assemblies, the bracket assemblies form a cutting region (105), a pipe (104) to be cut is placed in the cutting region, the rotating assembly is able to drive the cutting blade to perform rotary cutting on the pipe, and the locking assembly is configured to lock or unlock the pipe with the pipecutter; and
a first drive assembly (120) driven by the motor to drive the rotating assembly to rotate;
wherein the locking assembly comprises a rocker arm (161, 161a, 161b); when the rocker arm is at a first position, the locking assembly is in an unlocking state and the pipecutter releases the pipe; when the rocker arm is at a second position, the locking assembly is in a locking state and the pipe is locked by the pipecutter; and
the pipecutter further comprises a second drive assembly (400), the second drive assembly comprises a first pushing member (431), and the first pushing member is able to push the rocker arm to move from the first position to the second position;
**characterized in that**
the pipecutter further comprises an output shaft assembly (300), wherein the output shaft assembly connects the motor to the first drive assembly, and the output shaft assembly further connects the motor to the second drive assembly.

2. The pipecutter according to claim 1, wherein the first drive assembly and the second drive assembly are disposed on two sides of the rotating assembly.

3. The pipecutter according to claim 1, wherein the first drive assembly comprises a drive block (125) with an idle stroke, and when the drive block moves in the idle stroke, the rotating assembly remains unchanged in position.

4. The pipecutter according to claim 1, wherein the second drive assembly comprises a ring gear (410), the ring gear is drivable to move by the output shaft assembly, and the first pushing member is disposed on the ring gear.

5. The pipecutter according to claim 4, wherein the second drive assembly comprises a second pushing member (441) disposed on the ring gear, and the second pushing member is able to push the rocker arm to move from the second position to the first position.

6. The pipecutter according to claim 1, wherein the locking assembly further comprises a locking block (163a, 163b) and a locking plate (164), and the rocker arm is able to drive the locking block to slide on the locking plate; the bracket assemblies comprise a first bracket assembly (140) and a second bracket assembly (150), the cutting blade is disposed on the first bracket assembly, and the locking block is able to lock the first bracket assembly and the second bracket assembly when sliding on the locking plate.

7. The pipecutter according to claim 1, further comprising a battery pack coupling portion, a grip (220), and a cutting portion (210), wherein the battery pack coupling portion is used for mounting a battery pack (113) for powering the pipecutter, the grip is for a user to hold, the cutting portion comprises at least the cutting blade, the cutting blade rotates around a rotation axis (211) to implement a cutting function, and the grip is located between the cutting portion and the battery pack coupling portion.

8. The pipecutter according to claim 1, wherein the output shaft assembly comprises a gear skipping assembly.

9. The pipecutter according to claim 7, wherein when the battery pack is mounted to the pipecutter, an overall center of gravity (G) of the pipecutter is located in a holding region (221) of the grip.

10. The pipecutter according to claim 1, wherein the pipecutter is further configured with a parameter detection assembly, the parameter detection assembly comprises a position sensor, and the position sensor is configured to detect a position parameter of the rotating assembly and transmit the detected position parameter to a control assembly.

11. The pipecutter according to claim 10, wherein the position sensor is a Hall sensor, and the rotating assembly is equipped with a magnet for the Hall sensor to sense a current position of the rotating assembly.

12. The pipecutter according to claim 1, further comprising a grip (220) for a user to hold, wherein an outer circumference (1611) of the grip is greater than or equal to 100 mm and less than or equal to 175 mm.

13. The pipecutter according to claim 1, further comprising a grip (220) for a user to hold, wherein a switch (112) for controlling the motor to start and stop is disposed on the grip, and an outer circumference (1611) of the grip at the switch is greater than or equal to 140 mm and less than or equal to 175 mm.

## Patentansprüche

1. Rohrschneider (100), umfassend:
ein Gehäuse (110), das einen Aufnahmeraum (1100) bildet;
einen Motor (111), der in dem Gehäuse angeordnet ist;
eine Drehanordnung (130), die Halterungsanordnungen und eine Verriegelungsanordnung (160) umfasst, wobei an den Halterungsanordnungen eine Schneidklinge (143) zum Schneiden angeordnet ist, die Halterungsanordnungen einen Schneidbereich (105) bilden, ein zu schneidendes Rohr (104) in den Schneidbereich eingesetzt ist, die Drehanordnung in der Lage ist, die Schneidklinge anzutreiben, um an dem Rohr einen Rotationsschnitt durchzuführen, und die Verriegelungsanordnung dazu ausgebildet ist, das Rohr mit dem Rohrschneider zu verriegeln oder zu entriegeln; und
eine erste Antriebsanordnung (120), die durch den Motor angetrieben wird, um die Drehanordnung zu drehen;
wobei die Verriegelungsanordnung einen Kipphebel (161, 161a, 161b) umfasst; wenn sich der Kipphebel in einer ersten Position befindet, befindet sich die Verriegelungsanordnung in einem Entriegelungszustand und der Rohrschneider gibt das Rohr frei; wenn sich der Kipphebel in einer zweiten Position befindet, befindet sich die Verriegelungsanordnung in einem Verriegelungszustand und das Rohr wird durch den Rohrschneider verriegelt; und
der Rohrschneider ferner eine zweite Antriebsanordnung (400) umfasst, die zweite Antriebsanordnung ein erstes Schubelement (431) umfasst, und das erste Schubelement in der Lage ist, den Kipphebel zu schieben, damit er sich von der ersten Position zu der zweiten Position bewegt;
**dadurch gekennzeichnet, dass**
der Rohrschneider ferner eine Abtriebswellenanordnung (300) umfasst, wobei die Abtriebswellenanordnung den Motor mit der ersten Antriebsanordnung verbindet, und die Abtriebswellenanordnung ferner den Motor mit der zweiten Antriebsanordnung verbindet.

2. Rohrschneider nach Anspruch 1, wobei die erste Antriebsanordnung und die zweite Antriebsanordnung an zwei Seiten der Drehanordnung angeordnet sind.

3. Rohrschneider nach Anspruch 1, wobei die erste Antriebsanordnung einen Antriebsblock (125) mit einem Leerhub umfasst, und wenn sich der Antriebsblock in dem Leerhub bewegt, die Position der Drehanordnung unverändert bleibt.

4. Rohrschneider nach Anspruch 1, wobei die zweite Antriebsanordnung einen Zahnkranz (410) umfasst, der durch die Abtriebswellenanordnung antreibbar ist, und das erste Schubelement an dem Zahnkranz angeordnet ist.

5. Rohrschneider nach Anspruch 4, wobei die zweite Antriebsanordnung ein zweites Schubelement (441) umfasst, das an dem Zahnkranz angeordnet ist, und das zweite Schubelement in der Lage ist, den Kipphebel zu schieben, damit er sich von der zweiten Position zu der ersten Position bewegt.

6. Rohrschneider nach Anspruch 1, wobei die Verriegelungsanordnung ferner einen Verriegelungsblock (163a, 163b) und eine Verriegelungsplatte (164) umfasst, und der Kipphebel in der Lage ist, den Verriegelungsblock anzutreiben, auf der Verriegelungsplatte zu gleiten; die Halterungsanordnungen eine erste Halterungsanordnung (140) und eine zweite Halterungsanordnung (150) umfassen, die Schneidklinge an der ersten Halterungsanordnung angeordnet ist, und der Verriegelungsblock in der Lage ist, die erste Halterungsanordnung und die zweite Halterungsanordnung zu verriegeln, wenn er auf der Verriegelungsplatte gleitet.

7. Rohrschneider nach Anspruch 1, ferner umfassend einen Akkupack-Kopplungsabschnitt, einen Griff (220) und einen Schneidabschnitt (210), wobei der Akkupack-Kopplungsabschnitt zum Anbringen eines Akkupacks (113) zum Versorgen des Rohrschneiders mit Energie verwendet wird, der Griff zum Halten durch einen Benutzer dient, der Schneidabschnitt mindestens die Schneidklinge umfasst, die Schneidklinge sich um eine Rotationsachse (211) dreht, um eine Schneidfunktion zu realisieren, und der Griff zwischen dem Schneidabschnitt und dem Akkupack-Kopplungsabschnitt angeordnet ist.

8. Rohrschneider nach Anspruch 1, wobei die Abtriebswellenanordnung eine Zahnradüberspringanordnung umfasst.

9. Rohrschneider nach Anspruch 7, wobei, wenn der Akkupack an dem Rohrschneider angebracht ist, ein Gesamtschwerpunkt (G) des Rohrschneiders in einem Haltebereich (221) des Griffs liegt.

10. Rohrschneider nach Anspruch 1, wobei der Rohrschneider ferner mit einer Parameterdetektionsanordnung versehen ist, die Parameterdetektionsanordnung einen Positionssensor umfasst, und der Positionssensor dazu ausgebildet ist, einen Positionsparameter der Drehanordnung zu detektieren und den detektierten Positionsparameter an eine Steueranordnung zu übertragen.

11. Rohrschneider nach Anspruch 10, wobei der Positionssensor ein Hall-Sensor ist, und die Drehanordnung mit einem Magneten versehen ist, damit der Hall-Sensor eine aktuelle Position der Drehanordnung erfassen kann.

12. Rohrschneider nach Anspruch 1, ferner umfassend einen Griff (220) zum Halten durch einen Benutzer, wobei ein Außenumfang (1611) des Griffs größer als oder gleich 100 mm und kleiner als oder gleich 175 mm ist.

13. Rohrschneider nach Anspruch 1, ferner umfassend einen Griff (220) zum Halten durch einen Benutzer, wobei ein Schalter (112) zum Steuern des Motors zum Starten und Stoppen an dem Griff angeordnet ist, und ein Außenumfang (1611) des Griffs an dem Schalter größer als oder gleich 140 mm und kleiner als oder gleich 175 mm ist.

## Revendications

1. Coupe-tube (100), comprenant :
un boîtier (110) formant un espace de logement (1100) ;
un moteur (111), disposé dans le boîtier ;
un ensemble rotatif (130) comprenant des ensembles de support et un ensemble de verrouillage (160), dans lequel une lame de coupe (143) pour couper est disposée sur les ensembles de support, les ensembles de support forment une région de coupe (105), un tuyau (104) à couper est placé dans la région de coupe, l'ensemble rotatif est apte à entraîner la lame de coupe pour effectuer une coupe rotative du tuyau, et l'ensemble de verrouillage est configuré pour verrouiller ou déverrouiller le tuyau au moyen du coupe-tube ; et
un premier ensemble d'entraînement (120), entraîné par le moteur pour entraîner l'ensemble rotatif en rotation ;
dans lequel l'ensemble de verrouillage comprend un bras basculant (161, 161a, 161b) ; lorsque le bras basculant est dans une première position, l'ensemble de verrouillage est dans un état de déverrouillage et le coupe-tube libère le tuyau ; lorsque le bras basculant est dans une deuxième position, l'ensemble de verrouillage est dans un état de verrouillage et le tuyau est verrouillé par le coupe-tube ; et
le coupe-tube comprend en outre un deuxième ensemble d'entraînement (400), le deuxième ensemble d'entraînement comprenant un premier élément de poussée (431), et le premier élément de poussée est apte à pousser le bras basculant pour le déplacer de la première position à la deuxième position ;
**caractérisé en ce que**
le coupe-tube comprend en outre un ensemble d'arbre de sortie (300), dans lequel l'ensemble d'arbre de sortie relie le moteur au premier ensemble d'entraînement, et l'ensemble d'arbre de sortie relie en outre le moteur au deuxième ensemble d'entraînement.

2. Coupe-tube selon la revendication 1, dans lequel le premier ensemble d'entraînement et le deuxième ensemble d'entraînement sont disposés sur deux côtés de l'ensemble rotatif.

3. Coupe-tube selon la revendication 1, dans lequel le premier ensemble d'entraînement comprend un bloc d'entraînement (125) avec une course à vide, et lorsque le bloc d'entraînement se déplace dans la course à vide, la position de l'ensemble rotatif reste inchangée.

4. Coupe-tube selon la revendication 1, dans lequel le deuxième ensemble d'entraînement comprend une couronne dentée (410), la couronne dentée étant entraînable en mouvement par l'ensemble d'arbre de sortie, et le premier élément de poussée étant disposé sur la couronne dentée.

5. Coupe-tube selon la revendication 4, dans lequel le deuxième ensemble d'entraînement comprend un deuxième élément de poussée (441) disposé sur la couronne dentée, et le deuxième élément de poussée est apte à pousser le bras basculant pour le déplacer de la deuxième position à la première position.

6. Coupe-tube selon la revendication 1, dans lequel l'ensemble de verrouillage comprend en outre un bloc de verrouillage (163a, 163b) et une plaque de verrouillage (164), et le bras basculant est apte à entraîner le bloc de verrouillage à glisser sur la plaque de verrouillage ; les ensembles de support comprennent un premier ensemble de support (140) et un deuxième ensemble de support (150), la lame de coupe étant disposée sur le premier ensemble de support, et le bloc de verrouillage est apte à verrouiller le premier ensemble de support et le deuxième ensemble de support lorsqu'il glisse sur la plaque de verrouillage.

7. Coupe-tube selon la revendication 1, comprenant en outre une portion de couplage de bloc-batterie, une partie de préhension (220), et une portion de coupe (210), dans lequel la portion de couplage de bloc-batterie est utilisée pour monter un bloc-batterie (113) destiné à alimenter en énergie le coupe-tube, la partie de préhension est destinée à être tenue par un utilisateur, la portion de coupe comprend au moins la lame de coupe, la lame de coupe tourne autour d'un axe de rotation (211) pour réaliser une fonction de coupe, et la partie de préhension est située entre la portion de coupe et la portion de couplage de bloc-batterie.

8. Coupe-tube selon la revendication 1, dans lequel l'ensemble d'arbre de sortie comprend un ensemble de saut d'engrenage.

9. Coupe-tube selon la revendication 7, dans lequel, lorsque le bloc-batterie est monté sur le coupe-tube, un centre de gravité global (G) du coupe-tube est situé dans une région de préhension (221) de la partie de préhension.

10. Coupe-tube selon la revendication 1, dans lequel le coupe-tube est en outre configuré avec un ensemble de détection de paramètres, l'ensemble de détection de paramètres comprenant un capteur de position, et le capteur de position étant configuré pour détecter un paramètre de position de l'ensemble rotatif et transmettre le paramètre de position détecté à un ensemble de commande.

11. Coupe-tube selon la revendication 10, dans lequel le capteur de position est un capteur Hall, et l'ensemble rotatif est équipé d'un aimant pour que le capteur Hall détecte une position actuelle de l'ensemble rotatif.

12. Coupe-tube selon la revendication 1, comprenant en outre une partie de préhension (220) destinée à être tenue par un utilisateur, dans lequel une circonférence extérieure (1611) de la partie de préhension est supérieure ou égale à 100 mm et inférieure ou égale à 175 mm.

13. Coupe-tube selon la revendication 1, comprenant en outre une partie de préhension (220) destinée à être tenue par un utilisateur, dans lequel un interrupteur (112) pour commander le démarrage et l'arrêt du moteur est disposé sur la partie de préhension, et une circonférence extérieure (1611) de la partie de préhension au niveau de l'interrupteur est supérieure ou égale à 140 mm et inférieure ou égale à 175 mm.
